# EUROPEAN PATENT SPECIFICATION

(11) **EP 3 300 190 B1**
(45) Date of publication and mention of the grant of the patent: **02.07.2025**
(21) Application number: 16795733.1
(22) Date of filing: 21.03.2016
(51) Int. Cl.: H01S 3/067, H04B 10/073, H01S 3/16

(54) **METHOD OF CONTROLLING GAIN OF FIBER AMPLIFIER AND DEVICE UTILIZING SAME**
VERFAHREN ZUR STEUERUNG DER VERSTÄRKUNG EINES FASERVERSTÄRKERS UND VORRICHTUNG DAMIT
PROCÉDÉ DE CONTRÔLE DU GAIN D'UN AMPLIFICATEUR À FIBRE ET DISPOSITIF L'UTILISANT

(30) Priority: 20.05.2015 CN 201510259520
(43) Date of publication of application: 28.03.2018
(73) Proprietor: ZTE Corporation, Shenzhen, Guangdong 518057 (CN)
(72) Inventor: ZHU, Mo, Shenzhen, Guangdong 518057 (CN)
(74) Representative: Tiburzi, Andrea
(86) International application number: PCT/CN2016/076902
(87) International publication number: WO 2016/184246

(56) References cited:
- EP-A1- 1 750 333
- WO-A1-02/080318
- CN-A- 101 017 307
- CN-A- 101 141 201
- CN-A- 101 877 615
- US-A1- 2004 051 938
- US-A1- 2007 297 044
- MOHD ADZIR MAHDI ET AL: "Simplified ASE correction algorithm for variable gain-flattened erbium-doped fiber amplifier", OPTICS EXPRESS, vol. 17, no. 12, 8 June 2009 (2009-06-08), US, pages 10069 - 1178, XP055467954, ISSN: 1094-4087, DOI: 10.1364/OE.17.010069
- LIJIE QIAO ET AL: "ASE Analysis and Correction for EDFA Automatic Control", JOURNAL OF LIGHTWAVE TECHNOLOGY, IEEE SERVICE CENTER, NEW YORK, NY, US, vol. 25, no. 3, 1 March 2007 (2007-03-01), pages 771 - 778, XP011176449, ISSN: 0733-8724, DOI: 10.1109/JLT.2006.889665
- HE, HUAJIE: "Comparison of Measurement Method for EDFA Gain and Noise Factor", GUANGDONG COMMUNICATION TECHNOLOGY, vol. 19, no. 2, 30 April 1999 (1999-04-30), pages 38, XP009502627

## Description

### TECHNICAL FIELD

The present invention relates to the field of communications, and in particular, to a method of controlling gain of fiber amplifier and device utilizing the same.

### BACKGROUND

Erbium Doped Fiber Amplifier (EDFA), as a key component of the new generation of optical communication system, has the advantages of high gain, large output power, wide working bandwidth, no polarization dependence and low noise figure. The amplification characteristic of EDFA is independent of systematic bit rate and data format, and EDFA is an essential part of the Dense Wavelength Division Multiplexing (DWDM) system. The effective working range of EDFA is the C band that is directed to DWDM system, of which the center frequency is 193.1THz, the wavelength range is 1528-1561nm, and the channel spacing is an integral multiple of 100GHz (about 0.8nm). The C band contains 40 waves totally.

Because the DWDM system is a multi-wavelength working system, and also due to the saturated characteristics of the erbium doped fiber amplifier EDFA, the wavelength power in the saturation region remains stable. When some of the wavelength signals are lost, their energy will be transferred to those signals which are not lost due to gain competition, resulting in higher signal powers at other wavelengths. At the receiving end, a sudden increase in level may cause bit error, and in extreme cases, if there are 7 out of 8 wavelengths lost, all the power will be concentrated on the remaining wavelength, and the power may reach about 17 dBm. This will result in a strong non-linearity or over-loading of the receiver's received power, causing a large number of bit errors.

Therefore, the optical amplifier is required to have an automatic gain control function so that the EDFA has a wide dynamic range of input optical power in actual system cascading, so that the optical power of the remaining channels is unaffected regardless of the change of the input optical power in the DWDM system.

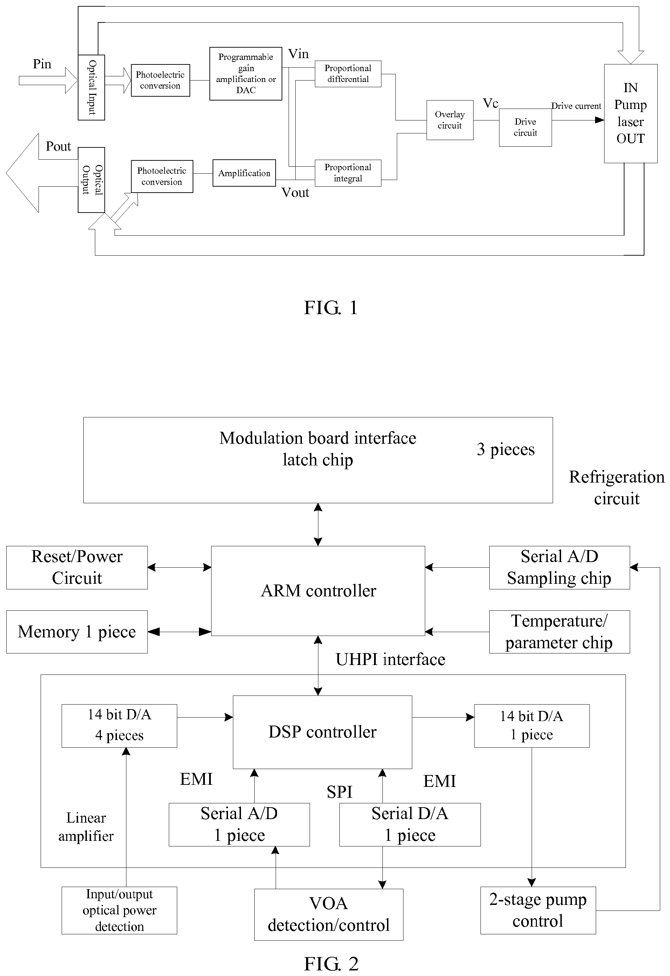

In the related art, FIG. 1 is a schematic diagram of a gain control device for an erbium doped fiber amplifier according to the related art. As shown in FIG. 1, the device includes a Pin photoelectric conversion module, a PIN program control gain amplification or DAC module, a Pout photoelectric conversion module, a Pout amplification module, a proportional integral control module, a proportional differential control module, a superposition circuit and a driving circuit. Among them, the Pin photoelectric conversion module is set to convert the input optical power into electrical signals, which is amplified by the PIN program control gain amplification or DAC module so as to adjust the gain lock value and gain compensation control when a small signal is input; the Pout photoelectric conversion module converts the output optical power to electrical signals, and the Pout amplification module is set to amplify the signal amplitude detected by Pout; Pin detection signal and Pout detection signal as a differential input signal are connected simultaneously to the input ends of the proportional integral control module and the proportional differential control module, and the superposition circuit takes the sum of the voltage outputs of the two control modules of the proportional integral and the proportional differential, Vc, as the voltage control signal, which is converted into a driving current signal meeting the driving requirement of the pump laser by the driving circuit.

The above solution has the following disadvantages.
1. The gain is not adjustable, because the control unit is composed of analog circuits, the transfer function of the control unit is composed of Laplace transform models of various electronic components, the transfer function is not variable, and thus the open-loop gain and closed-loop gain are not variable.
2. Due to the single control mode, it is not possible to choose different control modes according to the change of incident optical power so as to achieve different control results.
3. Overshoot cannot be avoided, due to the inherent nature of the analog circuit. When a step signal is input to the system, the result thereof is equivalent to that when the EDFA pump is on, and a certain amount of overshoot occurs, which can cause the output optical power jitter.
4. The optical power output threshold cannot be set. Although the adoption of EDFA improves optical power, this optical power is not the case that the bigger, the better. When the power reaches a certain level, the optical fiber will have nonlinear effects (including Raman scattering and Brillouin scattering), which will greatly limit the amplification performance of EDFA and the realization of long-distance non-relay transmission.

FIG. 2 is a schematic diagram of implementing a gain and power locking device in EDFA by using DSP according to the related art. In the related art, as shown in FIG. 2, the original closed-loop analog control unit are replaced by DSP, A/D, D/A, and software is used in the DSP to achieve efficient and flexible control algorithms. The entire control process includes: four 14-bit TI A/D sampling chips, divided into two levels and used to respectively sample input and output optical powers. The DSP of TI reads out the input and output optical power, and calculates the final output optical power according to the current control mode, and based on the gain or output optical power setting value, in combination with ASE compensation power. By a digital proportional integral derivative (PID) control algorithm of feedforward compensation type, the control voltage for driving the pump laser is calculated, and two pump lasers are controlled with a single 14-bit TI dual-channel D/A chip. The whole closed-loop control system completes a control in a cycle of about 2µs, which, coordinated with the tuned control parameters, can effectively achieve gain and power lock to meet the user's transient and steady-state requirements.

The above solution has the following disadvantages.
1. The proportional-differential control algorithm is carried out as treating an incident light as a disturbance and then compensating, and the compensation process needs to last 2µs, which turns out not fast enough to handle transient changes in EDFA optical power input.
2. The output jitter is excessive when the EDFA pump is on.
3. ASE compensation accuracy is not high enough. Due to the non-linear relationship between the ASE and the gain, it is not accurate to perform ASE compensation directly in the program code.

In view of the above problems in the related art, such as, the ASE compensation accuracy of the optical fiber amplifier is not high and the speed of the differential control is slow, no effective solution has been proposed so far.

In "Simplified ASE Correction Algorithm for Variable Gain-flattened Erbium-doped Fiber Amplifier", by Mohd Adzir Mahdi et al., OPTICS EXPRESS, vol. 17, no.12, 8 June 2009, pages 10069-1178, a simplified algorithm to manifest the contribution of amplified spontaneous emission in variable gain-flattened Erbium-doped fiber amplifier (EDFA) is proposed. The detected signal power at the input and output ports of EDFA comprises of both signal and noise. The generated amplified spontaneous emission form EDFA cannot be differentiated by photodetector which leads to underestimation of the targeted gain value. This gain penalty must be taken into consideration in order to obtain the accurate gain level. By taking the average gain penalty within the dynamic gain range, the targeted output power is set higher than the desired level.

Patent document EP 1750333A1 relates to an optical amplifier employing a rare earth-doped fiber as an amplification medium and including an input monitoring unit that monitors full input light and outputs an input monitor signal and an output monitoring unit that monitors full output light and outputs an output monitor signal includes an ASE compensating circuit that compensates for a spontaneous emission (ASE) component contained in the full output light monitor signal; a gain-variation-level compensating circuit that calculates a target average setup gain that is determined based on a signal intensity of the input monitor signal; and a constant gain control circuit that performs a gain control based on an output signal from the ASE compensating circuit and the target average setup gain from the gain-variation-level compensating circuit.

US 2007/297044 A1 discloses a method for gain control of an optical fiber amplifier, comprising the steps of: acquiring an input optical power and an output optical power of an optical fiber amplifier; measuring the output optical power and generating an amplified spontaneous emission ASE noise power of the optical fiber amplifier based on the output optical power; determining a corresponding ASE compensation power value according to a target gain and a correspondence between the ASE noise power and a preset gain; calculating and outputting a standard output optical power based on the input optical power, the ASE compensation power value, and the target gain, wherein measuring the output optical power and generating an amplified spontaneous emission ASE noise power of the optical fiber amplifier is based on the output optical power comprises: measuring a power spectral density at a preset range of the peak value of the output optical power, acquiring the output optical powers of multiple points in the range, and estimating the output optical power of the multiple points to generate the ASE noise power.

However, the above-mentioned issues remain unsolved.

### SUMMARY

The present invention provides a method and an apparatus for gain control of an optical fiber amplifier as defined in the appended claims, so as to at least solve the problems of the low ASE compensation accuracy of an optical fiber amplifier and the low speed of the differential control in the related art.

According to the present disclosure, a method for gain control of an optical fiber amplifier disclosed in claim 1 is provided.

In an embodiment of the present invention, after the input optical power and the output optical power of the optical fiber amplifier are acquired, the method may comprise steps as follows.

Finite Impulse Response FIR filtering is performed on the input optical power acquired by sampling.

In an embodiment of the present invention, when the optical fiber amplifier is in an off state, the output optical power is not output.

In an embodiment of the present invention, the method further comprises: setting a state of slowly turning-on when the optical fiber amplifier is turned on, wherein when in the state of slowly turning-on, an advancement is set according to the input optical power and the target gain, and the turning-on of the optical fiber amplifier is completed according to the advancement.

In an embodiment of the present invention, the calculating and outputting a standard output optical power based on the input optical power, the ASE compensation power value, and the target gain may comprise the following step.

The standard output optical power is calculated and output based on the input optical power delayed by a predetermined time in combination with the target gain and the ASE compensation power value.

In an embodiment of the present invention, after calculating and outputting a standard output optical power based on the input optical power, the ASE compensation power value, and the target gain, the method may comprise the step as follows.

The target gain, the ASE compensation power value and the input optical power are subtracted from the output standard output optical power to obtain an optical power error, an integral control is performed on the standard output optical power according to the optical power error and a preset steady state integral rate control parameter, and a final output optical power is output.

In an embodiment of the present invention, the method may comprise the step as follows.

A minimum clamp power is output in the absence of the input optical power, wherein the minimum clamp power is the minimum power value at which the optical fiber amplifier works normally.

In an embodiment of the present invention, the method may comprise the step as follows. No-input-optical-power alarm or hardware interrupt indication is generated in case that the input optical power is lower than a preset minimum input optical power.

In an embodiment of the present invention, the method may comprise the step as follows. Outputting of the standard output optical power is disabled, and only a maximum clamp output optical power is output, in case that the standard output optical power is higher than a preset maximum clamp output optical power.

According to the present invention, a device for gain control of an optical fiber amplifier according to claim 8 is provided.

In an embodiment of the present invention, the device further comprises at least one of: a filtering module, a pump-off module and a slowly turning-on module.

The filtering module is configured to perform Finite Impulse Response FIR filtering on the input optical power acquired by sampling.

The pump-off module is configured to not output the output optical power when the optical fiber amplifier is in an off state.

The slowly turning-on module is configured to set a state of slowly turning-on when the optical fiber amplifier is turned on, wherein when in the state of slowly turning-on, an advancement is set according to the input optical power and the target gain, and the turning-on of the optical fiber amplifier is completed according to the advancement.

In an embodiment of the present invention, the output module is further configured to calculate and output the standard output optical power based on the changed input optical power delayed by a predetermined time in combination with the target gain and the ASE compensation power value.

In an embodiment of the present invention, the device further comprises at least one of: a first integral control module, a not-turning-off module, an alarming module and an output-disable module.

The first integral control module is configured to subtract the target gain, the ASE compensation power value and the input optical power from the output standard output optical power to obtain an optical power error, and to perform integral control on the standard output optical power according to the optical power error and a preset steady state integral rate control parameter, and to output a final output optical power.

The not-turning-off module, configured to output a minimum clamp power in the absence of the input optical power, wherein the minimum clamp power is the minimum power value at which the optical fiber amplifier works normally.

The alarming module, configured to generate no-input-optical-power alarm or hardware interrupt indication in case that the input optical power is lower than a preset minimum input optical power.

The output-disable module is configured to disable outputting the standard output optical power and output only a maximum clamp output optical power in case that the standard output optical power is higher than a preset maximum clamp output optical power.

By means of the technical solution provided by the present invention, by acquiring input optical power and output optical power of an optical fiber amplifier; generating an amplified spontaneous emission ASE noise power based on the output optical power; searching an ASE compensation power value table for the corresponding ASE compensation power value according to the target gain, wherein the ASE compensation power value table is generated according to a correspondence between the ASE noise power and a preset gain; calculating and outputting a standard output optical power based on the input optical power, the ASE compensation power value, and the target gain, thereby the problems of low ASE compensation accuracy and slow speed of the differential control of the optical fiber amplifier are solved, and the ASE compensation accuracy and the speed of the differential control of the optical fiber amplifier are improved.

### BRIEF DESCRIPTION OF THE DRAWINGS

The drawings described herein are used to provide a further understanding of the present invention and constitute a part of the present application. The schematic embodiments and the descriptions of the present invention are used to explain the present invention, and do not constitute improper limitations to the present invention. In the drawings:
Fig. 1 is a schematic diagram of a gain control device for an erbium doped fiber amplifier according to the related art;
FIG. 2 is a schematic diagram of implementing a gain and power locking device in EDFA by using DSP according to the related art.
FIG. 3 is a flow chart of a method for gain control of an optical fiber amplifier according to an embodiment of the present invention;
FIG. 4 is a structural block diagram of a device for gain control of an optical fiber amplifier according to an embodiment of the present invention;
FIG. 5 is a schematic diagram of a device for stable fast gain control of an erbium doped fiber amplifier EDFA according to an embodiment of the present invention;
FIG. 6 is a schematic diagram of the curve of ASE noise power to EDFA gain according to an embodiment of the present invention;
FIG. 7 is a schematic diagram of measuring ASE noise power with a spectrometer using direct measurement according to an embodiment of the present invention;
FIG. 8 is a schematic diagram of a measured spectrogram of a laser output according to an embodiment of the present invention.

### DETAILED DESCRIPTION

Hereinafter, the present invention will be described in detail with reference to the accompanying drawings and embodiments. It should be noted that the embodiments in the present application and the features in the embodiments may be combined with each other as long as they are not conflicted with each other.

It should be noted that the terms "first", "second" and the like in the description and claims of the present invention as well as the above drawings are used to distinguish similar objects, and are not necessarily used to describe a specific sequence or a precedence order.

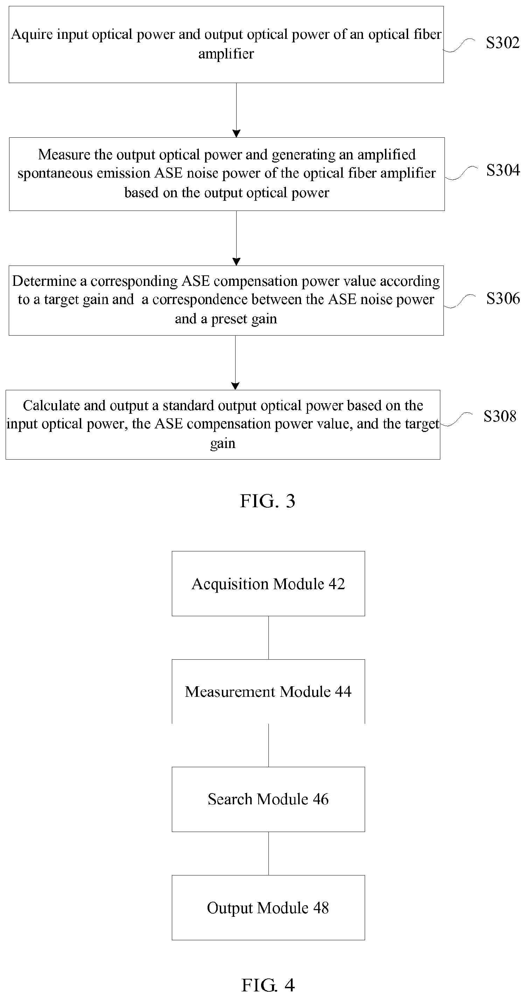

In this embodiment, a method for gain control of an optical fiber amplifier is provided, and FIG. 3 is a flow chart of a method for gain control of an optical fiber amplifier according to an embodiment of the present invention. As shown in FIG. 3, the flow comprises the following steps.

In step S302, input optical power and output optical power of an optical fiber amplifier are acquired.

In step S304, the output optical power and generating an amplified spontaneous emission ASE noise power of the optical fiber amplifier are measured based on the output optical power.

In step S306, a corresponding ASE compensation power value is determined according to a target gain and a correspondence between the ASE noise power and a preset gain.

In step S308, a standard output optical power based on the input optical power, the ASE compensation power value, and the target gain are calculated and output.

By performing the above steps, the output optical power is directly measured, and the amplified spontaneous emission ASE noise power of the optical fiber amplifier is generated, then based on the corresponding ASE compensation power value determined according to the target gain and according to a correspondence between the ASE noise power and a preset gain, thereby the standard output optical power is calculated and output based on the input optical power, the ASE compensation power value, and the target gain. Therefore, the problems of low ASE compensation accuracy and slow speed of the differential control of the optical fiber amplifier are solved, and the ASE compensation accuracy and the speed of the differential control of the optical fiber amplifier are improved.

Determining a corresponding ASE compensation power value according to the target gain and a correspondence between the ASE noise power and a preset gain comprises:
Searching an ASE compensation power value table for the ASE compensation power value corresponding to the target gain, wherein the ASE compensation power value table is generated according to a correspondence between the ASE noise power and a preset gain.

In this embodiment, Finite Impulse Response FIR filtering may be performed on the input optical power obtained from sampling, so as to smooth the input optical power and to eliminate discrete input power noises.

In this embodiment, the working state of the pump of the optical fiber amplifier may be set to an off state, the output optical power is not output when the optical fiber amplifier is in the off state.

In this embodiment, the working state of the pump of the optical fiber amplifier may be set to a state of slowly turning-on. When the optical fiber amplifier is turned on, the state of slowly turning-on is set. In the state of slowly turning-on, an advancement is set according to the input optical power and the target gain, and the turning-on of the optical fiber amplifier is completed according to the advancement, thereby avoiding or reducing the occurrence of overshoot.

Measuring output optical power and generating an amplified spontaneous emission ASE noise power of the optical fiber amplifier based on the output optical power comprises:
Measuring a power spectral density at a preset range of the peak value of the output optical power, acquiring the output optical powers of multiple points in the range, and averaging the output optical power of the multiple points to generate the ASE noise power.

In this embodiment, the ASE compensation power value table can be generated in a variety of methods, which are all based on the pre-set gain to fit the corresponding ASE noise power, for example, a multi-stage compensation method is used to fit a curve of the ASE noise power to the preset gain, and then the ASE compensation power value table is generated. In the multi-stage compensation method, the proportion coefficients in each polyline are consistent, so as to minimize the inaccurate problem caused by ASE compensation.

In this embodiment, the standard output optical power is calculated and output based on the input optical power that is delayed by a predetermined time in combination with the target gain and the ASE compensation power value. By adding that ASE, the standard output optical power is calculated and output, which increases the response speed to instantaneous change of input optical power and reduces the output jitter.

In this embodiment, the target gain, the ASE compensation power value and the input optical power may be subtracted from the output standard output optical power to obtain an optical power error. An integral control is performed on the standard output optical power according to the optical power error and a preset steady state integral rate control parameter, and a final output optical power is output. With the integral control, the steady performance of the optical fiber amplifier is improved.

In the above embodiment, a minimum clamp power is output in the absence of the input optical power, wherein the minimum clamp power is the minimum power value at which the optical fiber amplifier works normally.

No-input-optical-power alarm or hardware interrupt indication is generated in case that the input optical power is lower than a preset minimum input optical power.

Outputting the standard output optical power is disabled and only a maximum clamp output optical power is output in case where the standard output optical power is higher than a preset maximum clamp output optical power.

In this embodiment, an apparatus for gain control of an optical fiber amplifier is provided for implementing the foregoing embodiments and exemplary embodiments, which have been described in the above and will not be repeated here. As used herein below, the term "module" may be a combination of software and/or hardware that achieves a predetermined function. Although the devices described in the following embodiments are implemented in software, the implementation of hardware or a combination of software and hardware is also possible and contemplated.

FIG. 4 is a structural block diagram of a device for gain control of an optical fiber amplifier according to the present invention, as shown in FIG. 4, the device comprises an acquisition module 42, a measurement module 44, a search module 46 and an output module 48.

The acquisition module 42 is configured to acquire input optical power and output optical power of an optical fiber amplifier.

The measurement module 44 is configured to measure the output optical power and generate an amplified spontaneous emission ASE noise power of the optical fiber amplifier based on the output optical power.

The search module 46 is configured to determine a corresponding ASE compensation power value according to a target gain and a correspondence between the ASE noise power and a preset gain.

The output module 48 is configured to calculate and output a standard output optical power based on the input optical power, the ASE compensation power value, and the target gain.

The search module 46 further a table searching unit and a generating unit.

The table searching unit is configured to search, according to the target gain, an ASE compensation power value table for the ASE compensation power value corresponding to the target gain, wherein the ASE compensation power value table is generated according to a correspondence between the ASE noise power and a preset gain.

The generating unit is configured to generate the ASE compensation power value table by fitting a curve of the ASE noise power to the preset gain with a multi-stage compensation method.

In an embodiment of the present invention, the device further comprises: a filtering module, a pump-off module, and a slowly turning-on module.

The filtering module may be configured to perform Finite Impulse Response FIR filtering on the input optical power acquired by sampling.

The pump-off module may be configured to not output the output optical power when the optical fiber amplifier is in an off state.

The slowly turning-on module may be configured to set a state of slowly turning-on when the optical fiber amplifier is turned on, wherein when in the state of slowly turning-on, an advancement is set according to the input optical power and the target gain, and the turning-on of the optical fiber amplifier is completed according to the advancement.

The measuring unit is configured to measure a power spectral density at a preset range of the peak value of the output optical power, to acquire the output optical powers of multiple points in the range, and to average the output optical power of the multiple points to generate the ASE noise power.

In an embodiment of the present invention, the output module 48 is further configured to calculate and output the standard output optical power based on the changed input optical power delayed by a predetermined time in combination with the target gain and the ASE compensation power value.

In an embodiment of the present invention, the device may further comprise: a first integral control module, a not-turning-off module, an alarming module, and an output-disable module.

The first integral control module may be configured to subtract the target gain, the ASE compensation power value and the input optical power from the output standard output optical power to obtain an optical power error, and to perform integral control on the standard output optical power according to the optical power error and a preset steady state integral rate control parameter, and to output a final output optical power.

The not-turning-off module may be configured to output a minimum clamp power in the absence of the input optical power, wherein the minimum clamp power is the minimum power value at which the optical fiber amplifier works normally.

The alarming module may be configured to generate no-input-optical-power alarm or hardware interrupt indication in case that the input optical power is lower than a preset minimum input optical power.

The output-disable module may be configured to disable outputting the standard output optical power and output only a maximum clamp output optical power in case that the standard output optical power is higher than a preset maximum clamp output optical power.

The present invention is described in details below with reference to the examples and embodiments.

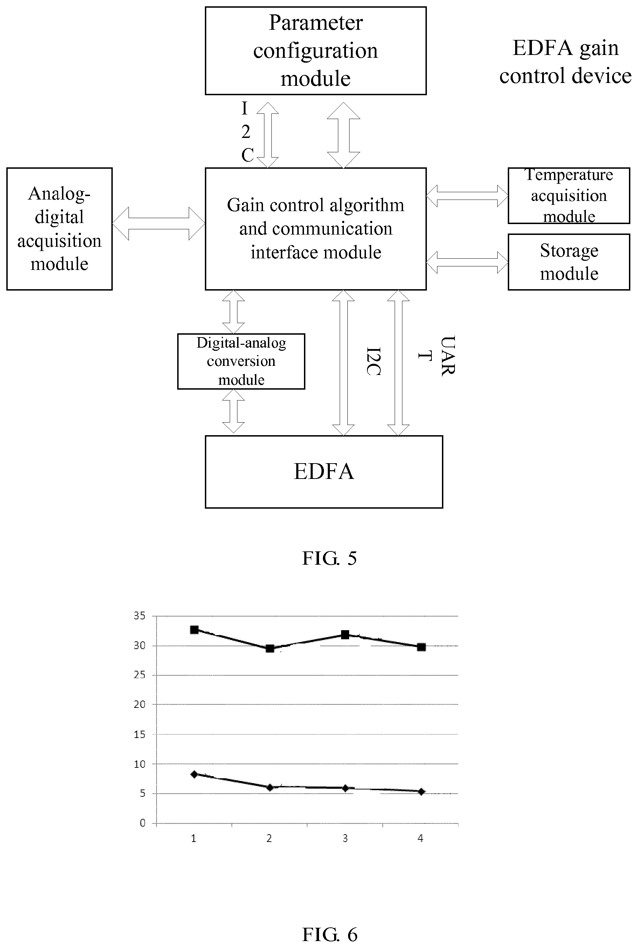

The present embodiment provides a method and a device for stable fast gain control of an erbium doped fiber amplifier EDFA. FIG. 5 is a schematic diagram of a device for stable fast gain control of an erbium doped fiber amplifier EDFA according to the present embodiment.

As shown in FIG. 5, the device comprises: a parameter configuration module, a gain control algorithm and communication interface module, an analog-digital acquisition module, a digital-analog conversion module, a temperature acquisition module, and a storage module.

The parameter configuration module can configure different control modes and control parameters for the gain control algorithm and communication interface module. The control modes may include: lower clamp mode, nominal output optical mode, normal output optical mode. And the control parameters may include: nominal output power, no-optical-input threshold, steady-state integral rate control parameter, nominal gain, lower clamp safety power, maximum clamp output power, and new set target gain.

The gain control algorithm and communication interface module is not only responsible for the dynamic control and steady state control, but also divides the working states of the EDFA pump into three types, including the pump-off state, the state of slowly turning-on, and the transient state, and the control method and control parameters in each state are different. At the same time, the present module is also responsible for communication with various means, including the analog-digital acquisition module, the digital-analog conversion module, temperature acquisition module, and storage module.

The analog-digital acquisition module acquires the input optical power and the output optical power of the EDFA, respectively, and sends the acquired digital data to the gain control algorithm and the communication interface module.

The digital-analog conversion module receives the gain control data obtained by the calculation of the gain control algorithm and communication interface module, transforms discrete data into analog data, and then sends the analog data to the EDFA.

The temperature acquisition module is responsible for measuring the temperature of the device, and sending the temperature values to the gain control algorithm and communication interface module in real time.

The storage module is responsible for storing the AES noise power compensation value, and passing the compensation value to the gain control algorithm and communication interface module.

The flow of the gain control method is as follows.

The analog-digital acquisition module acquires input and output optical powers of the EDFA, and firstly smooth the input optical power, to eliminate discrete noises; meanwhile compensates a small input signal with ASE power compensation, and the ASE power compensation value is determined by measuring the power spectral density at the output optical power peak at 0.1 nm or 0.4 nm using an optical power meter, and then by fthe polyline factor of the linear fit. The ASE compensation value is stored in the storage device in accordance with the corresponding value of the gain, and the ASE compensation value is read out from the storage module to be stored in the cache when the system is powered-on, and then is read out from the cache by looking up the table using the corresponding relationship with the gain. This value is added with the input optical power, and then added with the target gain, to calculate the compensated output current value. In this process, it should be noted that the calculation process is delayed, and therefore we need to delay the variation of the gain and the variation of the input power by 1 µs, and thereby overshoot can be reduced. The above process is the differential control method. Then, the standard optical output (standard output optical power) and the output optical power error are calculated according to the output optical power and the current control mode, wherein the standard optical output is used to decide whether to generate the steady-state integral rate control parameter according to whether it is less than the lower clamp optical power, and the output optical power error is used to control that the integral parameter must be compensated to prevent the optical input (input optical power) threshold is too low. And then addition and subtraction are executed step by step to achieve the required optical power output, which is the integral control method. The algorithm not only improves the dynamic performance of the system, shortens the adjustment time, reduces the overshoot, and thus is suitable for solving the situation that instant changes of the optical power are too high; the algorithm but also improves the steady state performance of the system, reduces the steady state error, reduces the error generated by ASE, and improves the gain lock performance. A cycle in which the whole closed-loop control system completes a control is about 1µs, which can effectively achieve the gain control and power lock to meet the user's dynamic and steady-state requirements.

As shown in FIG. 5, the whole device comprises: a parameter configuration module, a gain control algorithm and communication interface module, an analog-digital acquisition module, a digital-analog conversion module, a temperature acquisition module and a storage module. With such a design, it is unnecessary to provide the differential control and integral control composed of analog circuits, and is advantageous in that the problem that the gain cannot be changed and that the control mode is only one mode, is solved.

The working states of the EDFA pump are divided into three types: the pump-off state, the state of slowly turning-on, and the transient state.

In the pump-off state, there is no output power.

The state of slowly turning-on is provided because a certain range of overshoot will be generated when the EDFA pump is turned on, which will cause the output optical power jitters. The principle is as follows: according to the system configuration requirements, an advancement corresponding to 100 steps is set up between the initial power and the target gain, and thus (target gain - initial power) ÷ 100 * steps equal to the amplitude of each step. Then, when the pump is turned on, from the first step to the 100^{th} step, the action of turning on the pump is completed. The benefit of this method is to reduce the amplitude of overshoot generated in this part of turning on a pump.

After the completion of turning on the pump, it enters the transient state. In this state, the final output optical power is calculated from the acquired EDFA input and output optical power according to the current control mode, and based on the gain or output optical power setting value, in combination with ASE compensation power. The differential control algorithm here can be used to improve the dynamic performance of the system, shorten the adjustment time and reduce the overshoot, which is suitable for solving the situation that the optical power instant changes are too high; while the integral control algorithm can be used to improve the steady state performance of the system and reduce steady-state error.

The input optical power is smoothed, the input values which have been sampled are filtered with an FIR filter, eliminating the discrete noise, which ensures a filtering effect on the irregular burr. The reason for using an FIR filter is that the phase delay is linear within its passband. Meanwhile, the transition time of erbium ion is in the level of ms and the fluorescence time of excited erbium ion is 10ms. Therefore, the range of optical pulse envelope output by the laser amplifier is also in the level of ms, so the cut-off frequency of the filter is set to 10KHz. In exchange for the balance between the bandwidth of the transition band and the attenuation amplitude of the maximum side lobe, the bandwidth of the transition band is selected to be 19.5~21 KHz and the maximum side lobe assignment is -17~ -20 dB. And the order of 512 guarantees that the delay is not too large, and does not affect the response speed of differential control.

Compensation is added to the input signal. The optical power output from the EDFA is not the pure output optical power, a part of which is ASE noise, which is equivalent to that a part of the gain has been converted into ASE noise, and thus the ASE noise need to be compensated in order to improve the accuracy of the gain lock. Meanwhile, the ASE compensation value is related to EDFA erbium fiber length, erbium-doped concentration, EDFA internal optical path loss and so on, so different compensation values will be calculated in each EDFA detection.

Calculation of the ASE compensation value is performed as follows. The ASE power is generally calculated using the noise power approximation method, and the noise coefficient NC=10log{( 1/G )+Pase/(h*v*G*w)}, where h is Planck's constant, Pase is the ASE power, v is the frequency, G is the gain, and w is the frequency bandwidth. That is, ASE noise component is derived from the formula, and it can be basically confirmed to be related with the gain of the amplification part. That is, the characteristic of EDFA is that the output ASE noise changes only with the gain regardless of the input optical power.

FIG. 6 is a schematic diagram of the curve of ASE noise power to EDFA gain according to an embodiment of the present invention. As shown in FIG. 6, the gain is on the top, and the noise power is at the bottom of the figure. However, after the accurate measurement of the spectrometer, it is found that the ASE noise component and the gain do not exhibit a fixed coefficient multiple relationship, so ASE cannot be calculated as a fixed value during the ASE compensation calculation. Because the amplified signal after EDFA cascading contains a large ASE cascade noise, and most systems now use the EDFA pump cascade in order to transmit optical signals further, the formula that exhibit a fixed coefficient multiple relationship, is no longer applicable. Direct measurement should be used.

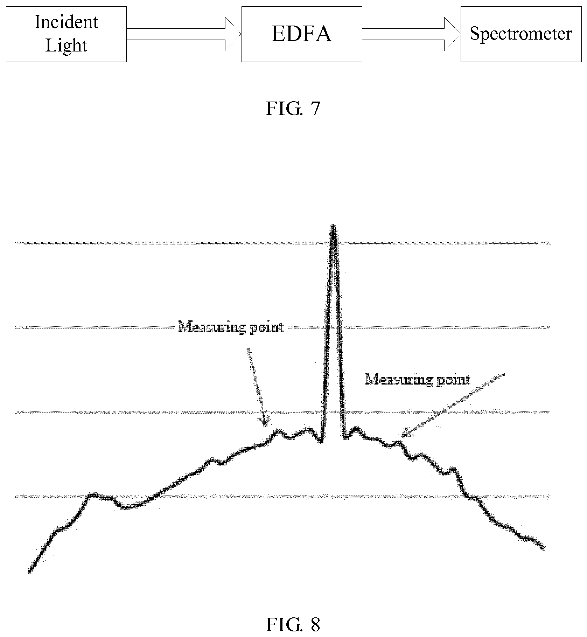

FIG. 7 is a schematic diagram of measuring ASE noise power with a spectrometer using direct measurement according to an embodiment of the present invention. As shown in FIG. 7, the power spectral density at a distance of about 0.1 nm or 0.4 nm from the peak of the output optical power is measured by using an optical power meter, then a number of points are selected, and the obtained values are averaged to obtain the ASE power, and the impact of the center wavelength can be avoided by choosing in this way.

FIG. 8 is a schematic diagram of a measured spectrogram of a laser output according to an embodiment of the present invention. As shown in FIG. 8, a statistical table is made and it is found that the curve is a little curved. So in the ASE compensation, the multi-stage compensation method is used, that is, fitting the curve of ASE and gain with several polylines so that the scale factor is consistent within each polyline. This minimizes the problem of being inaccuracy caused by the ASE compensation.

In the embodiment, the differential control method, the ASE compensation value is stored in the storage device in accordance with the corresponding value of the gain, and the ASE compensation value is read out from the storage module to be stored in the cache when the system is powered-on, and then is read out from the cache in the mode of table searching using the corresponding relationship with the gain. This value is added with the input optical power, then added with the target gain, and thus the compensated output current value is calculated. In this process, it should be noted that the calculation process is delayed because of the need to delay the variation of the gain and the variation of the input power by 1 µs, with the benefit of reducing overshoot and also improving the response speed to the instantaneous change of input optical power. The above process is the differential control method. It greatly improves the dynamic performance of the system, and at the same time, will not cause output jitters.

In the integral control method, since the system is a closed-loop system, it requires that the current set gain and input optical power need to be subtracted from the actual output optical power to obtain the output optical error, which is used for integral control, wherein the calculation to reduce the error is performed in accordance with the steady-state integral rate control parameters set by the parameter configuration module, and thereby achieve the integral control. According to all the above measures, the steady-state performance is greatly improved.

A light input power threshold is set, when the input optical power is lower than this threshold, an alarm of no optical input and hardware interrupt will be generated.

As the input optical power may be unstable or sometimes too high, it is necessary to limit the maximum optical output that the whole system can withstand, that is, to add a maximum clamp output optical power.

A non-shutdown mode is set, because in actual use, incidents such as cable cut off, equipment failure and the like will lead to optical power loss or even the state of the pump being shut down, for the sake of redundancy of the entire system, in order to restore the system immediately after the link is reconnected, there need a state in which the pump is not shut down even there is no input optical power. So a non-shutdown mode is set in the system, when there is no optical input, the system can output the minimum clamppower, to ensure that the pump is not shut down.

According to the above embodiments, the working state of the EDFA pump is divided into three types, including the pump-off state, the state of slowly turning-on, and the transient state, as the control states of the laser switch, so as to reduce the occurrence of overshoot.

The input optical power is smoothed, the input values which have been sampled are treated with FIR filtering, having the effect of eliminating the discrete noise

Direct measurement method is used, in which the power spectral density at a distance of about 0.1 nm or 0.4 nm from the peak of the output optical power is measured by using an optical power meter, then a number of points are selected within this range, and the measured power values are averaged to obtain the ASE noise power.

In the calculation of ASE compensation value, the multi-stage compensation method is used, that is, fitting the curve of ASE and gain with several polylines, so that the scale factor is consistent within each polyline. This minimizes the problem of being inaccuracy caused by the ASE compensation.

The ASE compensation value is stored in the storage device in accordance with the corresponding value of the gain, and the ASE compensation value is read out from the storage module to be stored in the cache when the system is powered-on, and then is read out from the cache by looking up a table based on the corresponding relationship with the gain.

A maximum clamp output optical power is added to prevent the optical power is too large.

The differential control algorithm delays the changed target gain and the input optical power by 1µs, and then is added with the ASE compensation value to obtain the initial output current value.

A non-shutdown mode is set. In actual use, it ensures that the system can output the minimum clamp power in the state that the optical cable is cut off or the equipment failures. Therefore, the system can recover after the link is reconnected, and the redundancy is improved.

From the above descriptions of the embodiments, those skilled in the art can clearly understand that the method according to the above embodiments may be implemented by software in combination with a necessary universal hardware platform, and certainly, may also be implemented by hardware. However, in many cases, the former is a better implementation. Based on such an understanding, the technical solutions of the present invention essentially, or the part contributing to the prior art, may be embodied in the form of a software product. The computer software product is stored in a storage medium (such as, a ROM/RAM, a magnetic disk, an optical disk) and includes several instructions for enabling a terminal device (which may be a mobile phone, a computer, a server, or a network device) to perform the method according to each embodiment of the present invention.

An embodiment of the present invention further provides a storage medium. Optionally, in this embodiment, the storage medium may be configured to store program codes for executing the steps in the foregoing embodiments. Optionally, in this embodiment, the storage medium may include, but is not limited to media that can store program code, for example, a U disk, a read-only memory (ROM), a random access memory (RAM), a removable disk, CD-ROM and the like.

Optionally, in this embodiment, the processor may execute the method in the foregoing embodiment according to the program codes stored in the storage medium.

Obviously, those skilled in the art should understand that each module or each step of the present invention described above can be implemented by common computing devices, which can be centralized on a single computing device or distributed on a network formed by multiple computing devices; or alternatively, they may be implemented by program codes executable by a computing device, so that they may be stored in the storage device and executed by the computing device. In some cases, the steps shown or described may be performed in an order different from the order herein, or they can be made into individual integrated circuit modules respectively, or a plurality of modules or steps can be made into a single integrated circuit module. As such, the present invention is not limited to any specific combination of hardware and software.

The foregoing descriptions are exemplary embodiments of the present invention. For those skilled in the art, the present invention may have various modifications and changes, as long as these fall within the scope of the appended claims.

### Industrial practicability

Based on the above technical solutions provided by the embodiments of the present invention, by acquiring input optical power and output optical power of an optical fiber amplifier; generating an amplified spontaneous emission ASE noise power based on the output optical power; searching an ASE compensation power value table for the corresponding ASE compensation power value according to the target gain, wherein the ASE compensation power value table is generated according to a correspondence between the ASE noise power and a preset gain; calculating and outputting a standard output optical power based on the input optical power, the ASE compensation power value, and the target gain, the problems of low ASE compensation accuracy and slow speed of the differential control of the optical fiber amplifier are solved, and the ASE compensation accuracy and the speed of the differential control of the optical fiber amplifier are improved.

## Claims

1. A method for gain control of an optical fiber amplifier, comprising:
acquiring (S302) an input optical power and an output optical power of an optical fiber amplifier;
measuring (S304) a power spectral density at a preset range of a peak value of the output optical power, acquiring output optical powers of multiple points in the preset range, and averaging the first output optical powers of the multiple points to generate an amplified spontaneous emission, ASE, noise power of the optical fiber amplifier;
determining (S306) a ASE compensation power value corresponding to a target gain according to the target gain and a correspondence between the ASE noise power and a preset gain;
calculating and outputting (S308) a standard output optical power based on the input optical power, the ASE compensation power value, and the target gain,
wherein
determining (S306) the ASE compensation power value corresponding to the target gain according to the target gain and the correspondence between the ASE noise power and the preset gain comprises:
searching, according to the target gain, an ASE compensation power value table for the ASE compensation power value corresponding to the target gain, wherein the ASE compensation power value table is generated according to a correspondence between the ASE noise power and a preset gain;
wherein the measuring (S304) the power spectral density at the preset range of the peak value of the output optical power, acquiring the output optical powers of multiple points in the preset range, and averaging the output optical powers of the multiple points to generate the amplified spontaneous emission ASE noise power of the optical fiber amplifier comprises:
measuring the power spectral density at the preset range which is 0.1 nm or 0.4 nm from the peak value of the output optical power by using an optical power meter, acquiring output optical powers of multiple points in the preset range, and averaging the output optical powers of the multiple points to generate the ASE noise power;
wherein generating the ASE compensation power value table according to the correspondence between the ASE noise power and the preset gain comprises:
generating the ASE compensation power value table by fitting a curve of the ASE noise power to the preset gain with a multi-stage compensation method.

2. The method according to claim 1, wherein after the acquiring (S302) the input optical power and the output optical power of an optical fiber amplifier, the method further comprises:
performing Finite Impulse Response, FIR, filtering on the acquired input optical power.

3. The method according to claim 1, further comprising: not outputting the output optical power when the optical fiber amplifier is in an off state.

4. The method according to claim 1, further comprising: setting a slowly turning-on state when the optical fiber amplifier is turned on, wherein when in the slowly turning-on state, an advancement is set according to the input optical power and the target gain, and the turning-on of the optical fiber amplifier is completed according to the advancement.

5. The method according to claim 1, wherein the calculating and outputting (S308) the standard optical power based on the input optical power, the ASE compensation power value and the target gain comprises:
calculating and outputting the standard output optical power, based on the input optical power delayed by a predetermined time, in combination with the target gain and the ASE compensation power value.

6. The method according to claim 1, wherein after the calculating and outputting (S308) the standard output optical power based on the input optical power, the ASE compensation power value and the target gain, the method further comprises:
subtracting the target gain, the ASE compensation power value and the input optical power from the standard output optical power to obtain an optical power error, performing integral control on the standard output optical power according to the optical power error and a preset steady state integral rate control parameter, and outputting a final output optical power.

7. The method according to claim 1, further comprising:
outputting a minimum clamp power in the absence of the input optical power, wherein the minimum clamp power is the minimum power value at which the optical fiber amplifier works normally;
generating no-input-optical-power alarm or hardware interrupt indication in case that the input optical power is lower than a preset minimum input optical power; and disabling outputting the standard output optical power and outputting only a maximum clamp output optical power in case that the standard output optical power is higher than a preset maximum clamp output optical power.

8. A device for gain control of an optical fiber amplifier, comprising:
an acquisition module (42), configured to acquire an input optical power and an output optical power of an optical fiber amplifier;
a measurement module (44), configured to measure a power spectral density at a preset range from a peak value of the output optical power, to acquire output optical powers of multiple points in the preset range, and to average the output optical powers of the multiple points to generate an amplified spontaneous emission ASE noise power of the optical fiber amplifier;
a search module (46), configured to determines a ASE compensation power value corresponding to a target gain according to the target gain and a correspondence between the ASE noise power and a preset gain;
an output module (48), configured to calculate and output a standard output optical power based on the input optical power, the ASE compensation power value, and the target gain,
wherein
the search module (46) further comprises:
a table searching unit, configured to search, according to the target gain, an ASE compensation power value table for the ASE compensation power value corresponding to the target gain, wherein the ASE compensation power value table is generated according to a correspondence between the ASE noise power and a preset gain;
the measurement module (44) includes a measuring unit which is configured to measure the a power spectral density at the preset range from the peak value of the output optical power, to acquire output optical powers of multiple points in the preset range, and to average the output optical power of the multiple points to generate the amplified spontaneous emission, ASE, noise power of the optical fiber amplifier by measuring the power spectral density at the preset range which is 0.1 nm or 0.4 nm from the peak value of the output optical power by using an optical power meter, acquiring output optical powers of multiple points in the preset range, and averaging the output optical powers of the multiple points to generate the ASE noise power;
wherein the search module (46) further comprises a generating unit, configured to generate the ASE compensation power value table by fitting a curve of the ASE noise power to the preset gain with a multi-stage compensation method.

9. The device according to claim 8, wherein the device further comprises at least one of:
a filtering module, configured to perform the Finite Impulse Response, FIR, filtering on the input optical power acquired by sampling;
a pump-off module, configured to not output the output optical power when the optical fiber amplifier is in an off state;
a slowly turning-on module, configured to set a slowly turning-on state when the optical fiber amplifier is turned on, wherein when in the slowly turning-on state, an advancement is set according to the input optical power and the target gain, and the turning-on of the optical fiber amplifier is completed according to the advancement.

10. The device according to claim 8, wherein the output module (48) is further configured to calculate and output the standard output optical power based on the input optical power delayed by a predetermined time in combination with the target gain and the ASE compensation power value.

11. The device according to claim 8, wherein the device further comprises at least one of:
a first integral control module, configured to subtract the target gain, the ASE compensation power value and the input optical power from the standard output optical power to obtain an optical power error, and to perform an integral control on the standard optical power according to the optical power error and a preset steady state integral rate control parameter, and to output a final output optical power;
a not-turning-off module, configured to output a minimum clamp power in the absence of the input optical power, wherein the minimum clamp power is the minimum power value at which the optical fiber amplifier works normally;
an alarming module, configured to generate no-input-optical-power alarm or hardware interrupt indication in case that the input optical power is lower than a preset minimum input optical power; and
an output-disable module, configured to disable outputting the standard output optical power and output only a maximum clamp output optical power in case that the standard output optical power is higher than a preset maximum clamp output optical power.

## Patentansprüche

1. Verfahren zur Steuerung der Verstärkung eines Faserverstärkers, umfassend:
Erfassen (S302) einer optischen Eingangsleistung und einer optischen Ausgangsleistung eines optischen Faserverstärkers;
Messung (S304) einer spektralen Leistungsdichte in einem voreingestellten Bereich eines Spitzenwertes der optische Ausgangsleistung, wobei die optischen Ausgangsleistungen mehrerer Punkte im voreingestellten Bereich erfasst werden,
und Mittelung der ersten optischen Ausgangsleistungen der mehreren Punkte, um eine verstärkte Spontanemissions-Rauschleistung, ASE des Lichtwellenleiterverstärkers zu erzeugen;
bestimmen (S306) eines ASE-Kompensationsleistungswertes, der einer Zielverstärkung entspricht, entsprechend der Zielverstärkung und einer Übereinstimmung zwischen der ASE-Rauschleistung und einer voreingestellten Verstärkung;
Berechnen und Ausgeben (S308) einer optischen Standard-Ausgangsleistung auf der Grundlage der optischen Eingangsleistung, des ASE-Kompensationsleistungswertes und der Zielverstärkung,
wobei
die Bestimmung (S306) des ASE-Kompensationsleistungswertes, der der Zielverstärkung entspricht, gemäß der Zielverstärkung und der Übereinstimmung zwischen der ASE-Rauschleistung und der voreingestellten Verstärkung umfasst:
suchen, entsprechend der Zielverstärkung, einer ASE-Kompensationsleistungswerttabelle für den ASE-Kompensationsleistungswert, der der Zielverstärkung entspricht, wobei die ASE-Kompensationsleistungswerttabelle entsprechend einer Entsprechung zwischen der ASE-Rauschleistung und einer voreingestellten Verstärkung erzeugt wird;
wobei das Messen (S304) der Leistungsspektraldichte in dem voreingestellten Bereich des Spitzenwerts der optischen Ausgangsleistung, das Erfassen der optischen Ausgangsleistungen mehrerer Punkte in dem voreingestellten Bereich und das Mitteln der optischen Ausgangsleistungen der mehreren Punkte zum Erzeugen der verstärkten Spontanemissions-Rauschleistung ASE des Lichtwellenleiterverstärkers umfasst:
Messen der spektralen Leistungsdichte in dem vorliegenden Bereich, der 0,1 nm oder 0,4 nm vom Spitzenwert der optischen Ausgangsleistung entfernt ist, unter Verwendung eines optischen Leistungsmessers, Erfassen der optischen Ausgangsleistungen mehrerer Punkte in dem voreingestellten Bereich und Mittelung der optischen Ausgangsleistungen der mehreren Punkte, um die ASE-Rauschleistung zu erzeugen;
wobei das Erzeugen der ASE-Kompensationsleistungswerttabelle gemäß der Entsprechung zwischen der ASE-Rauschleistung und der voreingestellten Verstärkung umfasst:
Erzeugung der ASE-Kompensationsleistungstabelle durch Anpassung einer Kurve der ASE-Rauschleistung an die voreingestellte Verstärkung mit einer mehrstufigen Kompensationsmethode.

2. Verfahren nach Anspruch 1, wobei das Verfahren nach dem Erfassen (S302) der optischen Eingangsleistung und der optischen Ausgangsleistung eines Lichtwellenleiter-Verstärkers weiterhin umfasst:
fIR-Filterung, FIR, der erfassten optischen Eingangsleistung.

3. Verfahren nach Anspruch 1, das ferner Folgendes umfasst: Nichtausgeben der optischen Ausgangsleistung, wenn sich der Lichtwellenleiterverstärker in einem ausgeschalteten Zustand befindet.

4. Verfahren nach Anspruch 1, ferner umfassend:
Einstellen eines langsamen Einschaltzustands, wenn der Lichtwellenleiterverstärker eingeschaltet wird, wobei in dem langsamen Einschaltzustand eine Vorwärtsbewegung entsprechend der optischen Eingangsleistung und der Zielverstärkung eingestellt wird und das Einschalten des Lichtwellenleiterverstärkers entsprechend der Vorwärtsbewegung abgeschlossen wird.

5. Verfahren nach Anspruch 1, wobei das Berechnen und Ausgeben (S308) der optischen Standardleistung basierend auf der optischen Eingangsleistung, dem ASE-Kompensationsleistungswert und der Zielverstärkung umfasst:
berechnen und Ausgeben der optischen Standard-Ausgangsleistung auf der Grundlage der um eine vorgegebene Zeit verzögerten optischen Eingangsleistung in Kombination mit der Zielverstärkung und dem ASE-Kompensationsleistungswert.

6. Verfahren nach Anspruch 1, wobei nach dem Berechnen und Ausgeben (S308) der optischen Standard-Ausgangsleistung auf der Grundlage der optischen Eingangsleistung, des ASE-Kompensationsleistungswertes und der Zielverstärkung das Verfahren ferner umfasst:
Subtrahieren der Zielverstärkung, des ASE-Kompensationsleistungswerts und der optischen Eingangsleistung von der optischen Standardausgangsleistung, um einen optischen Leistungsfehler zu erhalten, Durchführen einer Integralsteuerung der optischen Standardausgangsleistung entsprechend dem optischen Leistungsfehler und einem voreingestellten Integralratensteuerungsparameter für den stabilen Zustand und Ausgeben einer endgültigen optischen Ausgangsleistung.

7. Verfahren nach Anspruch 1 umfasst ferner:
ausgeben einer minimalen Klemmleistung in Abwesenheit der optischen Eingangsleistung, wobei die minimale Klemmleistung der minimale Leistungswert ist, bei dem der optische Faserverstärker normal arbeitet;
erzeugen einer Alarm für fehlende optische Eingangsleistung oder einer Hardware-Unterbrechungsanzeige, falls die optische Eingangsleistung niedriger als eine voreingestellte minimale optische Eingangsleistung ist; und
Deaktivieren der Ausgabe der optischen Standard-Ausgangsleistung und Ausgeben nur einer maximalen optischen Klemm-Ausgangsleistung, falls die optische Standard-Ausgangsleistung höher als eine voreingestellte maximale optische Klemm-Ausgangsleistung ist.

8. Vorrichtung zur Verstärkungsregelung eines faseroptischen Verstärkers, umfassend:
ein Erfassungsmodul (42), das so konfiguriert ist, dass es eine optische Eingangsleistung und eine optische Ausgangsleistung eines optischen Faserverstärkers erfasst;
ein Messmodul (44), das so konfiguriert ist, dass es eine Leistungsspektraldichte in einem voreingestellten Bereich von einem Spitzenwert der optischen Ausgangsleistung misst, um optische Ausgangsleistungen mehrerer Punkte in dem voreingestellten Bereich zu erfassen und die optischen Ausgangsleistungen der mehreren Punkte zu mitteln, um eine verstärkte Spontanemissions-Rauschleistung ASE des Lichtwellenleiterverstärkers zu erzeugen;
ein Suchmodul (46), das so konfiguriert ist, dass es einen ASE-Kompensationsleistungswert, der einer Zielverstärkung entspricht, entsprechend der Zielverstärkung und einer Entsprechung zwischen der ASE-Rauschleistung und einer voreingestellten Verstärkung bestimmt;
ein Ausgabemodul (48), das so konfiguriert ist, dass es eine optische Standardausgangsleistung auf der Grundlage der optischen Eingangsleistung, des ASE-Kompensationsleistungswertes und der Zielverstärkung berechnet und ausgibt,
wobei
das Suchmodul (46) umfasst ferner:
eine Tabellensucheinheit, die so konfiguriert ist, dass sie entsprechend der Zielverstärkung eine ASE-Kompensationsleistungswerttabelle nach dem ASE-Kompensationsleistungswert sucht, der der Zielverstärkung entspricht, wobei die ASE-Kompensationsleistungswerttabelle entsprechend einer Entsprechung zwischen der ASE-Rauschleistung und einer voreingestellten Verstärkung erzeugt wird;
das Messmodul (44) eine Messeinheit enthält, die konfiguriert ist, um die Leistungsspektraldichte in dem voreingestellten Bereich von dem Spitzenwert der optischen Ausgangsleistung zu messen, um optische Ausgangsleistungen von mehreren Punkten in dem voreingestellten Bereich zu erfassen und um die optische Ausgangsleistung der mehreren Punkte zu mitteln, um die Rauschleistung der verstärkten spontanen Emission, ADE, des optischen Faserverstärkers zu erzeugen, indem die Leistungsspektraldichte in dem voreingestellten Bereich gemessen wird, der 0.1 nm oder 0,4 nm vom Spitzenwert der optischen Ausgangsleistung entfernt ist, unter Verwendung eines optischen Leistungsmessers, Erfassen der optischen Ausgangsleistungen mehrerer Punkte in dem voreingestellten Bereich, und Mitteln der ersten optischen Ausgangsleistungen der mehreren Punkte, um die ASE-Rauschleistung zu erzeugen;
wobei das Suchmodul (46) ferner eine Erzeugungseinheit umfasst, die konfiguriert ist, um die ASE-Kompensationsleistungswerttabelle durch Anpassen einer Kurve der ASE-Rauschleistung an die voreingestellte Verstärkung mit einem mehrstufigen Kompensationsverfahren zu erzeugen.

9. Vorrichtung nach Anspruch 8, wobei die Vorrichtung außerdem mindestens eines der folgenden Merkmale aufweist:
ein Filtermodul, das so konfiguriert ist, dass es die FIR-Filterung, FIR, an der durch Abtastung erfassten optischen Eingangsleistung durchführt;
ein Pump-Off-Modul, das so konfiguriert ist, dass es die optische Ausgangsleistung nicht ausgibt, wenn sich der optische Faserverstärker in einem ausgeschalteten Zustand befindet;
ein Modul zum langsamen Einschalten, das so konfiguriert ist, dass es einen Zustand des langsamen Einschaltens einstellt, wenn der LichtwellenleiterVerstärker eingeschaltet wird, wobei in dem Zustand des langsamen Einschaltens eine Vorwärtsbewegung entsprechend der optischen Eingangsleistung und der Zielverstärkung eingestellt wird und das Einschalten des Lichtwellenleiter-Verstärkers entsprechend der Vorwärtsbewegung abgeschlossen wird.

10. Vorrichtung nach Anspruch 8, wobei das Ausgangsmodul (48) ferner so konfiguriert ist, dass es die optische Standardausgangsleistung auf der Grundlage der um eine vorbestimmte Zeit verzögerten optischen Eingangsleistung in Kombination mit der Zielverstärkung und dem ASE-Kompensationsleistungswert berechnet und ausgibt.

11. Vorrichtung nach Anspruch 8, wobei die Vorrichtung außerdem mindestens eines der folgenden Merkmale aufweist:
ein erstes Integralsteuermodul, das so konfiguriert ist, dass es die Zielverstärkung, den ASE-Kompensationsleistungswert und die optische Eingangsleistung von der optischen Standardausgangsleistung subtrahiert, um einen optischen Leistungsfehler zu erhalten, und eine Integralsteuerung der zweiten optischen Leistung gemäß dem optischen Leistungsfehler und einem voreingestellten Integralraten-Steuerparameter für einen stabilen Zustand durchführt und eine endgültige optische Ausgangsleistung ausgibt;
ein Nichtabschaltmodul, das so konfiguriert ist, dass es bei Fehlen der optischen Eingangsleistung eine minimale Klemmleistung ausgibt, wobei die minimale Klemmleistung der minimale Leistungswert ist, bei dem der optische Faserverstärker normal arbeitet;
ein Alarmierungsmodul, das so konfiguriert ist, dass es einen Alarm bei fehlender optischer Eingangsleistung oder eine Hardware-Unterbrechungsanzeige erzeugt, wenn die optische Eingangsleistung niedriger als eine voreingestellte minimale optische Eingangsleistung ist; und
ein Modul zum Deaktivieren der Ausgabe, das so konfiguriert ist, dass es die Ausgabe der optischen Standardausgangsleistung deaktiviert und nur eine maximale optische Klemmausgangsleistung ausgibt, falls die optische Standardausgangsleistung höher als eine voreingestellte maximale optische Klemmleistung ist.

## Revendications

1. Procédé de contrôle du gain d'un amplificateur à fibre optique, consistant à:
acquérir (S302) une puissance optique d'entrée et une puissance optique de sortie d'un amplificateur à fibre optique;
mesurer (S304) d'une densité spectrale de puissance dans une plage prédéfinie d'une valeur de crête de l'échantillon d'eau la puissance optique de sortie, en acquérant les puissances optiques de sortie de plusieurs points dans la plage prédéfinie,
et faire la moyenne des premières puissances optiques de sortie des points multiples pour générer une puissance de bruit d'émission spontanée amplifiée, ASE de l'amplificateur à fibre optique;
déterminer (S306) une valeur de puissance de compensation ASE correspondant à un gain cible en fonction du gain cible et d'une correspondance entre la puissance de bruit ASE et un gain prédéfini;
calculer et émettre (S308) une puissance optique de sortie standard basée sur la puissance optique d'entrée, la valeur de puissance de compensation ASE et le gain cible,
dans lequel
déterminer (S306) la valeur de la puissance de compensation ASE correspondant au gain cible en fonction du gain cible et de la correspondance entre la puissance de bruit ASE et le gain prédéfini comprend:
rechercher, en fonction du gain cible, une table de valeurs de puissance de compensation ASE pour la valeur de puissance de compensation ASE correspondant au gain cible, la table de valeurs de puissance de compensation ASE étant générée en fonction d'une correspondance entre la puissance de bruit ASE et un gain prédéfini;
dans lequel la mesure (S304) de la densité spectrale de puissance dans la plage prédéfinie de la valeur de crête de la puissance optique de sortie, l'acquisition des puissances optiques de sortie de plusieurs points dans la plage prédéfinie, et le calcul de la moyenne des puissances optiques de sortie des plusieurs points pour générer la puissance de bruit de l'émission spontanée amplifiée ASE de l'amplificateur à fibre optique consiste à:
mesurer la densité spectrale de puissance dans la plage actuelle située à 0,1 nm ou 0,4 nm de la valeur de crête de la puissance optique de sortie à l'aide d'un wattmètre optique, acquérir les puissances optiques de sortie de plusieurs points dans la plage prédéfinie et calculer la moyenne des puissances optiques de sortie des différents points afin de générer la puissance de bruit ASE;
dans lequel la génération de la table des valeurs de puissance de compensation ASE en fonction de la correspondance entre la puissance de bruit ASE et le gain prédéfini consiste à:
générer le tableau des valeurs de puissance de compensation ASE en ajustant une courbe de la puissance de bruit ASE au gain prédéfini à l'aide d'une méthode de compensation à plusieurs niveaux.

2. Procédé selon la revendication 1, dans lequel après l'acquisition (S302) de la puissance optique d'entrée et de la puissance optique de sortie d'un amplificateur à fibre optique, le procédé consiste en outre à:
effectuer un filtrage à réponse impulsionnelle finie, FIR sur la puissance optique d'entrée acquise.

3. Procédé selon la revendication 1, comprenant en outre: ne pas émettre la puissance optique de sortie lorsque l'amplificateur de fibre optique est dans un état d'arrêt.

4. Procédé selon la revendication 1, comprenant en outre: l'établissement d'un état de mise en marche lente lorsque l'amplificateur à fibre optique est mis en marche, dans lequel, dans l'état de mise en marche lente, un avancement est établi en fonction de la puissance optique d'entrée et du gain cible, et la mise en marche de l'amplificateur à fibre optique est achevée en fonction de l'avancement.

5. Procédé selon la revendication 1, dans lequel le calcul et la sortie (S308) de la puissance optique standard basée sur la puissance optique d'entrée, la valeur de puissance de compensation ASE et le gain cible consistent à:
calculer et émettre la puissance optique de sortie standard, sur la base de la puissance optique d'entrée retardée d'un temps prédéterminé, en combinaison avec le gain cible et la valeur de la puissance de compensation ASE.

6. Procédé selon la revendication 1, dans lequel après le calcul et la sortie (S308) de la puissance optique de sortie standard basée sur la puissance optique d'entrée, la valeur de puissance de compensation ASE et le gain cible, la méthode comprend en outre:
soustraire le gain cible, la valeur de la puissance de compensation ASE et la puissance optique d'entrée de la puissance optique de sortie standard pour obtenir une erreur de puissance optique, effectuer un contrôle intégral sur la puissance optique de sortie standard en fonction de l'erreur de puissance optique et d'un paramètre de contrôle du taux intégral à l'état stable prédéfini, et émettre une puissance optique de sortie finale.

7. Procédé selon la revendication 1, consistant en outre à:
émettre une puissance de serrage minimale en l'absence de la puissance optique d'entrée, la puissance de serrage minimale étant la valeur de puissance minimale à laquelle l'amplificateur à fibre optique fonctionne normalement;
générer une alarme d'absence de puissance optique d'entrée ou une indication d'interruption matérielle si la puissance optique d'entrée est inférieure à une puissance optique d'entrée minimale prédéfinie; et en désactivant la sortie de la puissance optique de sortie standard et en ne sortant qu'une puissance optique de sortie de serrage maximale si la puissance optique de sortie standard est supérieure à une puissance optique de sortie de serrage maximale prédéfinie.

8. Dispositif de contrôle du gain d'un amplificateur à fibre optique, comprenant:
un module d'acquisition (42), configuré pour acquérir une puissance optique d'entrée et une puissance optique de sortie d'un amplificateur à fibre optique;
un module de mesure (44), configuré pour mesurer une densité spectrale de puissance dans une plage prédéfinie à partir d'une valeur de crête de la puissance optique de sortie, pour acquérir les puissances optiques de sortie de plusieurs points dans la plage prédéfinie, et pour faire la moyenne des puissances optiques de sortie des plusieurs points afin de générer une puissance de bruit d'émission spontanée amplifiée ASE de l'amplificateur à fibre optique;
un module de recherche (46), configuré pour déterminer une valeur de puissance de compensation ASE correspondant à un gain cible en fonction du gain cible et d'une correspondance entre la puissance de bruit ASE et un gain prédéfini;
un module de sortie (48), configuré pour calculer et émettre une puissance optique de sortie standard en fonction de la puissance optique d'entrée, de la valeur de puissance de compensation ASE et du gain cible,
dans lequel
le module de recherche (46) comprend en outre:
une unité de recherche de table, configurée pour rechercher, en fonction du gain cible, une table de valeurs de puissance de compensation ASE pour la valeur de puissance de compensation ASE correspondant au gain cible, la table de valeurs de puissance de compensation ASE étant générée en fonction d'une correspondance entre la puissance de bruit ASE et un gain prédéfini;
le module de mesure (44) comprend une unité de mesure configurée pour mesurer la densité spectrale de puissance dans la plage prédéfinie à partir de la valeur de crête de la puissance optique de sortie, pour acquérir les puissances optiques de sortie de plusieurs points dans la plage prédéfinie et pour faire la moyenne des puissances optiques de sortie des plusieurs points afin de générer la puissance de bruit de l'émission spontanée amplifiée, ESA de l'amplificateur à fibre optique en mesurant la densité spectrale de puissance dans la plage prédéfinie qui se trouve à 0.1 nm ou 0,4 nm de la valeur de crête de la puissance optique de sortie à l'aide d'un wattmètre optique, en acquérant les puissances optiques de sortie de plusieurs points dans la plage prédéfinie et en calculant la moyenne des premières puissances optiques de sortie des plusieurs points pour générer la puissance de bruit ASE;
le module de recherche (46) comprend en outre une unité de génération, configurée pour générer le tableau des valeurs de puissance de compensation ASE en ajustant une courbe de la puissance de bruit ASE au gain prédéfini avec une méthode de compensation à plusieurs niveaux.

9. Dispositif selon la revendication 8, dans lequel le dispositif comprend en outre au moins l'un des éléments suivants:
un module de filtrage, configuré pour effectuer le filtrage de la réponse impulsionnelle finie (FIR) sur la puissance optique d'entrée acquise par échantillonnage;
un module de pompage, configuré pour ne pas émettre la puissance optique de sortie lorsque l'amplificateur à fibre optique est à l'arrêt;
un module de mise en marche lente, configuré pour définir un état de mise en marche lente lorsque l'amplificateur à fibre optique est mis en marche, dans lequel, dans l'état de mise en marche lente, un avancement est défini en fonction de la puissance optique d'entrée et du gain cible, et la mise en marche de l'amplificateur à fibre optique est achevée en fonction de l'avancement.

10. Dispositif selon la revendication 8, dans lequel le module de sortie (48) est en outre configuré pour calculer et émettre la puissance optique de sortie standard sur la base de la puissance optique d'entrée retardée d'un temps prédéterminé en combinaison avec le gain cible et la valeur de puissance de compensation ASE.

11. Dispositif selon la revendication 8, dans lequel le dispositif comprend en outre au moins l'un des éléments suivants:
un premier module de contrôle intégral, configuré pour soustraire le gain cible, la valeur de puissance de compensation ASE et la puissance optique d'entrée de la puissance optique de sortie standard afin d'obtenir une erreur de puissance optique, et pour effectuer un contrôle intégral sur la seconde puissance optique en fonction de l'erreur de puissance optique et d'un paramètre de contrôle du taux intégral à l'état stable prédéfini, et pour émettre une puissance optique de sortie finale;
un module de désactivation, configuré pour émettre une puissance de serrage minimale en l'absence de puissance optique d'entrée, la puissance de serrage minimale étant la valeur de puissance minimale à laquelle l'amplificateur à fibre optique fonctionne normalement;
un module d'alarme, configuré pour générer une alarme d'absence de puissance optique d'entrée ou une indication d'interruption matérielle dans le cas où la puissance optique d'entrée est inférieure à une puissance optique d'entrée minimale prédéfinie; et
un module de désactivation de la sortie, configuré pour désactiver la sortie de la puissance optique de sortie standard et pour émettre uniquement une puissance optique de sortie de serrage maximale dans le cas où la puissance optique de sortie standard est supérieure à une puissance optique de serrage maximale prédéfinie.
